# EUROPÄISCHE PATENTSCHRIFT

(11) **EP 3 045 687 B1**
(45) Veröffentlichungstag und Bekanntmachung des Hinweises auf die Patenterteilung: **18.04.2018**
(21) Anmeldenummer: 16150326.3
(22) Anmeldetag: 06.01.2016
(51) Int. Cl.: F01D 25/24

(54) **TURBINENGEHÄUSE FÜR EINEN ABGASTURBOLADER**
TURBINE HOUSING FOR AN EXHAUST GAS TURBOCHARGER
BOITIER DE TURBINE POUR UNE TURBOSOUFFLANTE DE GAZ D'ECHAPPEMENT

(30) Priorität: 14.01.2015 DE 102015100517
(43) Veröffentlichungstag der Anmeldung: 20.07.2016
(73) Patentinhaber: Benteler Automobiltechnik GmbH, 33102 Paderborn (DE)
(72) Erfinder: Grußmann, Elmar, 33184 Altenbeken-Buke (DE)
(74) Vertreter: Osterhoff, Utz

(56) Entgegenhaltungen:
- EP-A2- 2 388 455
- EP-A2- 2 525 050
- JP-A- 2002 054 447

## Beschreibung

Die Erfindung betrifft ein Turbinengehäuse für einen Abgasturbolader gemäß den Merkmalen im Oberbegriff von Patentanspruch 1.

Abgasturbolader erhöhen durch Verdichtung der zur Verbrennung notwendigen Luft den Luftdurchsatz eines Motors. Durch den Einsatz von Abgasturboladern lassen sich im Vergleich zu Saugmotoren bei identischem Hubraum Leistung, Drehmoment und auch der Wirkungsgrad steigern. Der Abgasturbolader besteht aus einer Turbine und einem Verdichter, die auf einer gemeinsamen Welle montiert und statisch miteinander verbunden sind. Die Turbine bzw. das Turbinenrad wird durch den heißen Abgasstrom angetrieben. Das Verdichterrad wird durch die statische Verbindung ebenfalls gedreht und verdichtet die einströmende Frischluft. Die Temperatur der verdichteten Luft wird durch einen Ladeluftkühler abgekühlt, um das Volumen zu verringern und so mehr Luft bzw. mehr Sauerstoff in den Brennraum führen zu können. Durch den Einsatz von Abgasturboladern wird nicht nur eine Leistungssteigerung erzielt, sondern in erster Linie auch eine Energieersparnis und Emissionsminderung erreicht.

Durch die DE 100 22 052 C2 zählt ein Turbinengehäuse für einen Abgasturbolader zum Stand der Technik. Hier wird die Entkopplung von abgasführenden Bauteilen und tragenden bzw. dichtenden Außenstrukturen vorgeschlagen. Das Laufrad- bzw. Innengehäuse ist aus zwei Halbschalen zusammengesetzt und von einem Außengehäuse umgeben, wobei zwischen den beiden Gehäusen ein Luftspalt besteht. Dieser Luftspalt wirkt wärmeisolierend und reduziert somit die Wärmeabstrahlung. Mit dem Laufradgehäuse und dem Außengehäuse ist ein Lagerflansch verschweißt.

Auch bei dem aus der DE 10 2009 025 054 A1 bekannten Turbinengehäuse befindet sich ein Innengehäuse in einem Außengehäuse. Das Innengehäuse ist aus zwei Blechschalen gebildet, die am Außenumfang miteinander verschweißt sind. Das Außengehäuse ist sowohl mit einem Lagerflansch als auch mit einem Auslassflansch verschweißt.

Einen ähnlichen Aufbau des Turbinengehäuses zeigt die DE 102010 021 114 A1. Sowohl das Außengehäuse als auch das Innengehäuse sind aus zwei Halbschalen zusammengesetzt. Das Außengehäuse ist mit einem Lagerflansch stoffschlüssig verbunden. Das Innengehäuse ist formschlüssig mit dem Lagerflansch gekoppelt.

Bei dem aus der DE 10 2009 042 260 A1 bekannten Turbinengehäuse ist der Lagerflansch mit dem Außengehäuse verschweißt. Der Lagerflansch kann ein separates Bauteil oder einstückig zusammen mit dem Innen- bzw. Laufradgehäuse ausgebildet sein.

Ferner ist aus der EP 2 525 050 A2 ein Abgasturbolader bekannt, bei welchem ein Innengehäuse mit einem Lagerflansch gekoppelt ist. Hierzu ist das Innengehäuse dem Lagerflansch einer umgebördelten Kante zumindest teilweise durchgreifend formschlüssig gekoppelt.

Wie bereits einleitend ausgeführt, wird ein Abgasturbolader von den Motorabgasen angetrieben. Diese werden mit hoher Geschwindigkeit und hohen Temperaturen von teilweise über 1.000°C auf die Turbinenschaufeln bzw. das Turbinenrad geleitet. Dementsprechend unterliegt der Turbolader während des Betriebes hohen mechanischen und insbesondere höchsten thermischen Belastungen. Wegen der hohen thermischen Belastungen wird das Innengehäuse häufig aus Gusswerkstoffen einstückig ausgeführt. Das Außengehäuse besteht in der Regel aus umgeformten Blechschalen. Diese sind üblicherweise über eine Schweißverbindung mit dem Lagerflansch verschweißt, welcher zur Befestigung des Abgasturboladers an einem Lagergehäuse eines Turbinenrades dient. Durch die direkte Beaufschlagung der Innenschale des Turbinengehäuses mit Abgas dehnt sich die Innenschale im Verhältnis zur Außenschale stärker aus. Durch dieses unterschiedliche Aufheizverhalten werden Biegemomente in die Anbindungsstelle von Lagerflansch und Außenschale eingebracht, die die Bauteilfestigkeit maßgeblich reduzieren können.

Der Erfindung liegt daher ausgehend vom Stand der Technik die Aufgabe zugrunde, die thermische Dauerfestigkeit eines Turbinengehäuses, insbesondere im Fügebereich zwischen Lagerflansch und Außenschale, zu verbessern.

Die Lösung dieser Aufgabe besteht in einem Turbinengehäuse mit den Merkmalen von Anspruch 1.

Vorteilhafte Ausgestaltungen und Weiterbildungen des erfindungsgemäßen Turbinengehäuses sind Gegenstand der abhängigen Ansprüche 2 bis 7.

Das Turbinengehäuse eines Abgasturboladers umfasst ein Außengehäuse und ein Innengehäuse sowie einen Lagerflansch. Das Außengehäuse ist mit dem Lagerflansch gefügt. Erfindungsgemäß weist das Innengehäuse einen Flanschstutzen auf, auf welchem der Lagerflansch positioniert ist. Weiterhin ist ein Haltering vorgesehen, welcher mit dem Flanschstutzen gefügt ist. Der Lagerflansch ist durch den Haltering in Axialrichtung gehalten, wobei der Haltering einen zum Flanschstutzen gerichteten Ringabschnitt mit einer vorderen Stirnfläche besitzt und der Flanschstutzen eine Stirnfläche aufweist, wobei der Ringabschnitt und der Flanschstutzen einander mit den Stirnflächen kontaktieren und gefügt sind und die Stirnfläche des Flanschstutzens und die Stirnfläche des Ringabschnitts zueinander komplementär schräg ausgebildet sind.

Die erfindungsgemäße Ausgestaltung bewirkt eine Entkoppelung des Innengehäuses vom Lagerflansch, wodurch eine Erhöhung der thermischen Dauerfestigkeit erreicht wird. Das derzeit üblicherweise einteilig aus Guss inklusive Lagerflansch hergestellte Innengehäuse wird im Bereich der Trennstelle in mehrere Bauteile aufgeteilt. Das Innengehäuse weist einen Flanschstutzen auf. Hierauf wird der Lagerflansch positioniert. Anschließend wird der Haltering in den Lagerflansch eingesetzt und mit dem Flanschstutzen des Innengehäuses stoffschlüssig verbunden. Üblicherweise erfolgt dies über eine Schweiß- oder Lötverbindung. Der Haltering ist so konfiguriert, dass er den Lagerflansch von innen umgreift. Hierdurch entsteht eine formschlüssige Verklammerung des Lagerflansches. Durch diese Maßnahme wird eine begrenzte Bewegungsmöglichkeit des Innengehäuses erreicht, was die im Betrieb auftretenden Biegemomente bzw. -belastungen deutlich reduziert.

Das erfindungsgemäße Turbinengehäuse weist eine deutlich erhöhte Bauteilfestigkeit auf. Das erfindungsgemäß ausgestaltete Turbinengehäuse ist auch bei weitersteigenden Motorleistungen einsetzbar, insbesondere auch bei noch höheren Betriebstemperaturen.

Der Haltering weist einen radial umlaufenden Kranzabschnitt auf, welcher an einem inneren Schulterabschnitt des Lagerflanschs anliegt. Diese Maßnahme verbessert die formschlüssige Positionierung des Lagerflansches durch den Haltering. Mit dem Kranzabschnitt greift der Haltering am inneren Schulterabschnitt des Lagerflansches an unter Gewährleistung der erfindungsgemäß vorgesehenen Bewegungsmöglichkeit des Innengehäuses.

Zweckmäßigerweise besitzt der Haltering einen zum Flanschstutzen gerichteten Ringabschnitt mit einer vorderen Stirnfläche. Der Flanschstutzen weist eine Stirnfläche auf, wobei der Ringabschnitt und der Flanschabschnitt einander mit den Stirnflächen kontaktieren und gefügt sind.

Die Stirnfläche des Flanschstutzens und die Stirnfläche des Ringabschnitts sind zueinander komplementär schräg ausgebildet. Dies ist sowohl montagetechnisch als auch fügetechnisch vorteilhaft.

Eine weitere vorteilhafte Ausführung sieht vor, dass der Lagerflansch an seinem Innenumfang benachbart zum Bereich der Fügung zwischen Flanschstutzen und Haltering eine radial umlaufende Nut aufweist. Die Nut dient zur Bauteiltrennung und ist eine Freimachung, um im Fügeprozess zwischen Flanschstutzen und Haltering eine stoffschlüssige Verbindung mit dem Lagerflansch zu vermeiden.

Weiterhin vorteilhaft ist, wenn der Haltering an seinem Außenumfang zumindest bereichsweise eine Profilierung ausweist. Die Profilierung erhöht den Reib- bzw. Kraftschluss im Kontaktbereich zwischen Haltering und Lagerflansch. Vorzugsweise ist die Profilierung durch eine Rändelung oder eine Riffelung gebildet. Durch die Profilierung, insbesondere eine achsparallele Rändelung, des Halteringes kann die rotatorische Positionierung des Innengehäuses relativ zum Lagerflansch bewirkt werden. Die Profilierung trägt zu einer Verdrehsicherung zwischen Lagerflansch und Innengehäuse bei.

Insbesondere ist der Flanschstutzen materialeinheitlich einstückiger Bestandteil des Innengehäuses. Der Flanschstutzen geht in den radialen Wandabschnitt des Innengehäuses über. Hierbei reduziert sich der dickwandige Teil des Flanschstutzens in den radial gerichteten Wandabschnitt des Innengehäuses.

Das Außengehäuse ist mit dem Lagerflansch gefügt. Hierzu ist am Lagerflansch ein außenseitig umlaufender Steg vorgesehen, über welchen das Außengehäuse mit dem Lagerflansch gefügt ist. Unmittelbar benachbart zum Steg ist eine Nut ausgebildet, in welche das Außengehäuse eingreift. Das Außengehäuse selber ist aus Blechschalen aus Stahl gebildet. Zweckmäßigerweise besteht das Außengehäuse aus einer Oberschale und einer Unterschale, die einander gegenüberliegend in die Nut eingreifen. Der Fügebereich zwischen Außengehäuse und Lagerflansch unterlag bislang hohen Biegemomenten infolge der Temperaturwechsel. Es handelt sich folglich um einen hochbelasteten Fügebereich. Dieser hochbelastete Fügebereich wird durch die erfindungsgemäße Ausgestaltung entlastet.

Vorteilhafterweise besitzt der Lagerflansch einen Anlageabschnitt, mit welchem der Lagerflansch außenseitig am Flanschstutzen sowie außenseitig an der Innenschale anliegt. Dieser Aspekt unterstützt das Zusammenwirken zwischen Lagerflansch, Innengehäuse, Außengehäuse und Haltering vorteilhaft.

Wie erwähnt, werden das Innengehäuse und der Haltering nach der Positionierung des Lagerflansches miteinander verbunden. Hierbei werden der Haltering und das Innengehäuse im Bereich des Flanschstutzens miteinander gefügt. Der Haltering und der Flanschstutzen des Innengehäuses sind in einer quer zur Längsachse des Turbinengehäuses ausgerichteten Querebene aneinander gesetzt und über eine am Innenumfang umlaufende Fügenaht miteinander verbunden. Die beiden Bauteile werden durch einen stoffschlüssigen Fügeprozess, insbesondere einem Laserschweiß- oder Lötprozess, nach einer vorhergehenden mechanischen Bearbeitung der Trennebene verbunden. Bei der Werkstoffwahl von Innengehäuse und Haltering sollen vorrangig Materialkombinationen austenitisch/austenitisch oder ferritisch/ferritisch gewählt werden. Hierdurch kann thermischen bzw. mechanischen Spannungen im Bereich der Fügung durch unterschiedliche Ausdehnungskoeffizienten entgegen gewirkt werden.

Vorzugsweise bestehen das Innengehäuse, der Lagerflansch und der Haltering aus hitzebeständigem Stahlguss, insbesondere einem nicht rostenden hitzebeständigen austenitischen Chrom-Nickel-Stahl. Stahlguss wird insbesondere für das Innengehäuse verwendet. Der Haltering und der Lagerflansch können entweder gegossen, geschmiedet oder auch gesintert werden.

Im Rahmen der Erfindung ist es auch möglich, dass das Innengehäuse, der Lagerflansch und der Haltering aus verschiedenen Stahlgusswerkstoffen hergestellt sind. Hierbei kann beispielsweise das Innengehäuse aus einem Stahlgusswerkstoff erster Art bestehen. Gleiches gilt für den Lagerflansch, wohingegen der Haltering aus dem hitzebeständigen Stahlguss zweiter Art hergestellt ist.

Die Erfindung ist nachfolgend anhand eines in den Zeichnungen dargestellten Ausführungsbeispiels näher beschrieben. Es zeigen:
- Figur 1: in perspektivischer Darstellungsweise einen Abgaskrümmer einer Brennkraftmaschine mit angeschlossenem Turbinengehäuse eines nachgeschalteten Abgasturboladers;
- Figur 2: die Darstellung auf den Abgaskrümmer entsprechend der Figur 1 in einer Ansicht;
- Figur 3: einen Schnitt durch das Turbinengehäuse entlang der Linie A - A der Figur 2 und
- Figur 4: einen vergrößerten Ausschnitt aus der Darstellung des Turbinengehäuses von Figur 3.

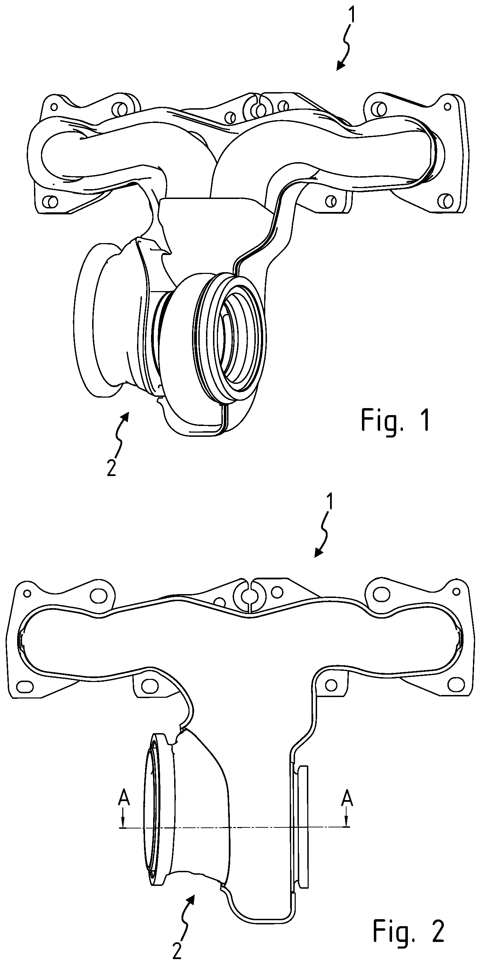

Die Figuren 1 und 2 zeigen einen Abgaskrümmer 1 einer Brennkraftmaschine mit einem Turbinengehäuse 2 eines nachgeschalteten Abgasturboladers.

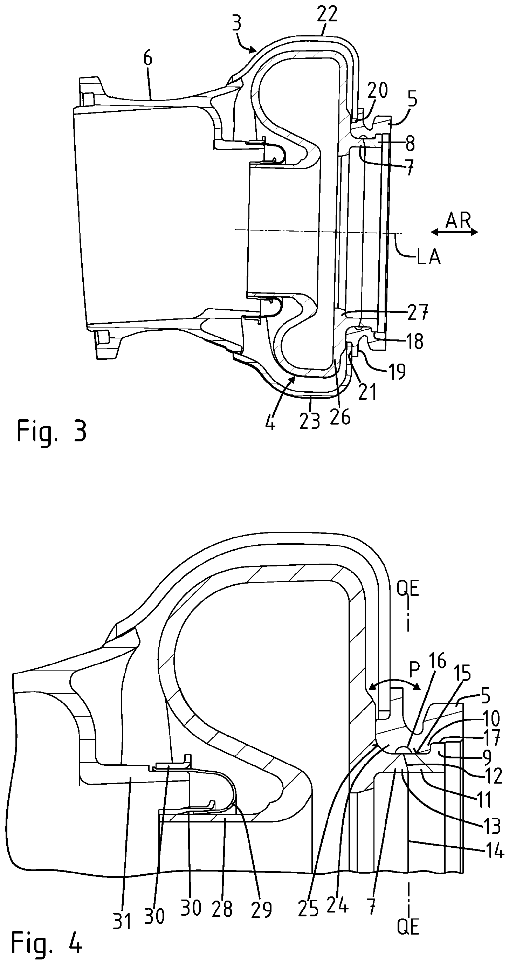

Das Turbinengehäuse 2 ist näher anhand der Figuren 3 und 4 erläutert.

Das Turbinengehäuse 2 umfasst ein Außengehäuse 3 und ein Innengehäuse 4. Ferner ist ein Lagerflansch 5 sowie ein Austrittsflansch 6 vorgesehen.

Das Innengehäuse 4 besteht aus einem hitzebeständigen Stahlgusswerkstoff. Das Innengehäuse 4 weist auf der zum Lagerflansch 5 gerichteten Seite materialeinheitlich einstückig einen Flanschstutzen 7 auf. Auf dem Flanschstutzen 7 ist der Lagerflansch 5 positioniert und durch einen innenliegenden Haltering 8 in Axialrichtung AR gehalten. Auch der Lagerflansch 5 und der Haltering 8 bestehen aus einem hitzebeständigen Stahlgusswerkstoff. Der Haltering 8 ist innen in den Lagerflansch 5 eingesetzt und mit dem Flanschstutzen 7 durch einen stoffschlüssigen Fügeprozess, insbesondere einem Laserschweiß- oder Lötprozess, gefügt.

Der Haltering 8 verklammert den Lagerflansch 5 formschlüssig mit dem Innengehäuse 4. Der Haltering 8 weist einen radial umlaufenden Kranzabschnitt 9 auf, welcher an einem inneren Schulterabschnitt 10 des Lagerflansches 5 anliegt. An den Schulterabschnitt 10 des Halteringes 8 schließt sich ein zum Flanschstutzen 7 gerichteter Ringabschnitt 11 an. Der Ringabschnitt 11 besitzt eine vordere Stirnfläche 12. Der Flanschstutzen 7 besitzt eine äußere Stirnfläche 13. Die Stirnfläche 12 des Ringabschnittes 11 und die Stirnfläche 13 des Flanschstutzens 7 sind zueinander komplementär schräg ausgebildet. Der Haltering 8 und der Flanschstutzen 7 sind in einer quer zur Längsachse LA des Turbinengehäuses 2 ausgerichteten Querebene QE aneinander gesetzt. Hierbei kontaktieren sich die Stirnfläche 13 des Flanschstutzens 7 und die Stirnfläche 12 des Ringabschnittes 11. Über eine am Innenumfang umlaufende Fügenaht 14 sind der Haltering 8 und der Flanschstutzen 7 miteinander gefügt.

Der Lagerflansch 5 weist an seinem Innenumfang 15 benachbart zum Bereich der Fügung zwischen Flanschstutzen 7 und Haltering 8 eine radial umlaufende Nut 16 auf. Die Nut 16 dient zur Bauteiltrennung, um im Fügeprozess zwischen Flanschstutzen 7 und Haltering 8 eine stoffschlüssige Verbindung mit dem Lagerflansch 5 zu vermeiden.

An seinem Außenumfang 17 weist der Haltering 8 eine Profilierung 18 auf. Die Profilierung 18 ist insbesondere als achsparallele Rändelung ausgebildet. Die Profilierung 18 übernimmt die rotatorische Positionierung des Innengehäuses 4 und Lagerflansch 5 relativ zueinander und wirkt als Verdrehsicherung. Insbesondere ist die Profilierung 18 am Außenumfang 17 des Kranzabschnitts 9 des Halteringes 8 vorgesehen.

Außenseitig weist der Lagerflansch 5 einen umlaufenden Steg 19 auf. Benachbart zum Steg 19 ist eine Nut 20 ausgebildet. Über den Steg 19 ist das Außengehäuse 3 mit dem Lagerflansch 5 mittels einer stoffschlüssigen Fügung 21 verbunden, insbesondere durch eine Schmelzschweißverbindung oder eine Lötverbindung. Das Außengehäuse 3 besteht aus Stahlblech und ist aus einer Oberschale 22 und einer Unterschale 23 zusammengesetzt, die einander gegenüberliegend in die Nut 20 eingreifen und mit dem Steg 19 gefügt sind.

Der Fügebereich zwischen Außengehäuse 3 und Lagerflansch 5 zählt zu den am höchsten belasteten Zonen des Turbinengehäuses 2. Hier treten hohe Biegemomente infolge von Temperaturwechseln auf. Die Biegemomente infolge von Temperaturwechseln in dem hochbelasteten Fügebereich sind durch den Pfeil P in der Figur 4 gekennzeichnet. Durch die Entkoppelung des Innengehäuses 4 vom Lagerflansch 5 und der axialen Halterung des Lagerflansches 5 mittels des Halteringes 8 wird eine begrenzte Bewegungsmöglichkeit des Innengehäuses 4 ermöglicht. Hierdurch kann die hohe Belastung infolge der im Betrieb auftretenden Biegemomente, insbesondere im hochbelasteten Fügebereich zwischen Lagerflansch 5 und Außengehäuse 3 reduziert werden.

Der Lagerflansch 5 weist ferner einen Anlageabschnitt 24 auf. Mit dem Anlageabschnitt 24 liegt der Lagerflansch 5 außenseitig am Flanschstutzen 7 sowie außenseitig am Innengehäuse 4 an. Der Anlageabschnitt 24 besitzt eine gekrümmt verlaufende Außenkontur 25, welche angepasst ist auf die gekrümmte Kontur im Übergang vom Flanschstutzen 7 zum radial ausgerichteten Wandabschnitt 26 des Innengehäuses 4. Die Wanddicke des Innengehäuses 4 ist im Bereich des Übergangs vom Flanschstutzen 7 in den radialen Wandabschnitt 26 stärker ausgeführt ist als die Wanddicke des sich hieran anschließenden Spiralbereiches des Innengehäuses 4.

Ein Innenkranz 27 des Innengehäuses 4 bildet einen Anschlag für im Flanschstutzen 7 und am Haltering 8 aufgenommene Lagerbauteile.

Man erkennt des Weiteren, dass das Außengehäuse 3 mit dem Austrittsflansch 6 verbunden ist. Das Innengehäuse 4 weist einen Auslassstutzen 28 auf, der über eine Gleitmanschette 29 und Klemmbauteile 30 mit einem Aufnahmestutzen 31 verbunden ist, der integrativer materialeinheitlich einstückiger Bestandteil des Austrittsflansches 6 ist.

**Bezugszeichen:**
- 1 -: Abgaskrümmer
- 2 -: Turbinengehäuse
- 3 -: Außengehäuse
- 4 -: Innengehäuse
- 5 -: Lagerflansch
- 6 -: Austrittsflansch
- 7 -: Flanschstutzen
- 8 -: Haltering
- 9 -: Kranzabschnitt
- 10 -: Schulterabschnitt
- 11 -: Ringabschnitt
- 12 -: Stirnfläche von 11
- 13 -: Stirnfläche von 7
- 14 -: Fügenaht
- 15 -: Innenumfang
- 16 -: Nut
- 17 -: Außenumfang
- 18 -: Profilierung
- 19 -: Steg
- 20 -: Nut
- 21 -: Fügung
- 22 -: Oberschale
- 23 -: Unterschale
- 24 -: Anlageabschnitt
- 25 -: Außenkontur
- 26 -: Wandabschnitt
- 27 -: Innenkranz
- 28 -: Auslassstutzen
- 29 -: Gleitmanschette
- 30 -: Klemmbauteile
- 31 -: Aufnahmestutzen
- QE -: Querebene
- LA -: Längsachse von 2
- AR -: Axialrichtung
- P -: Pfeil

## Patentansprüche

1. Turbinengehäuse für einen Abgasturbolader, welches ein Außengehäuse (3) und ein Innengehäuse (4) sowie einen Lagerflansch (5) aufweist, wobei das Außengehäuse (3) mit dem Lagerflansch (5) gefügt ist, **dadurch gekennzeichnet, dass** das Innengehäuse (4) einen Flanschstutzen (7) aufweist, auf welchem der Lagerflansch (5) positioniert ist und ein Haltering (8) vorgesehen ist, welcher mit dem Flanschstutzen (7) gefügt ist und der Lagerflansch (5) durch den Haltering (8) in Axialrichtung (AR) gehalten ist, wobei der Haltering (8) einen zum Flanschstutzen (7) gerichteten Ringabschnitt (11) mit einer vorderen Stirnfläche (12) besitzt und der Flanschstutzen (7) eine Stirnfläche (13) aufweist, wobei der Ringabschnitt (11) und der Flanschstutzen (7) einander mit den Stirnflächen (12; 13) kontaktieren und gefügt sind und die Stirnfläche (13) des Flanschstutzens (7) und die Stirnfläche (12) des Ringabschnitts (11) zueinander komplementär schräg ausgebildet sind.

2. Turbinengehäuse nach Anspruch 1, **dadurch gekennzeichnet, dass** der Haltering (8) einen radial umlaufenden Kranzabschnitt (9) aufweist, welcher an einem inneren Schulterabschnitt (10) des Lagerflanschs (5) anliegt.

3. Turbinengehäuse nach einem der Ansprüche 1 oder 2, **dadurch gekennzeichnet, dass** der Lagerflansch (5) an seinem Innenumfang (15) benachbart zum Bereich der Fügung zwischen Flanschstutzen (7) und Haltering (8) eine radial umlaufende Nut (16) aufweist.

4. Turbinengehäuse nach einem der Ansprüche 1 bis 3, **dadurch gekennzeichnet, dass** der Haltering (8) an seinem Außenumfang (17) zumindest bereichsweise eine Profilierung (18) aufweist.

5. Turbinengehäuse nach einem der Ansprüche 1 bis 4, **dadurch gekennzeichnet, dass** der Flanschstutzen (7) materialeinheitlich einstückiger Bestandteil des Innengehäuses (4) ist.

6. Turbinengehäuse nach einem der Ansprüche 1 bis 5, **dadurch gekennzeichnet, dass** der Lagerflansch (5) einen außenseitig umlaufenden Steg (19) aufweist, über welchen das Außengehäuse (3) mit dem Lagerflansch (5) gefügt ist.

7. Turbinengehäuse nach einem der Ansprüche 1 bis 6, **dadurch gekennzeichnet, dass** der Lagerflansch (5) mit einem Anlageabschnitt (24) außenseitig am Flanschstutzen (7) sowie außenseitig am Innengehäuse (4) anliegt.

## Claims

1. Turbine housing for an exhaust gas turbocharger, which has an outer housing (3) and an inner housing (4) and a bearing flange (5), wherein the outer housing (3) is joined to the bearing flange (5), **characterised in that** the inner housing (4) has a flange connection piece (7) on which the bearing flange (5) is positioned and there is provided a retention ring (8) which is joined to the flange connection piece (7) and the bearing flange (5) is retained by the retention ring (8) in an axial direction (AR), wherein the retention ring (8) has an annular portion (11) which is directed towards the flange connection piece (7) and which has a front end face (12) and the flange connection piece (7) has an end face (13), wherein the annular portion (11) and the flange connection piece (7) contact each other with the end faces (12; 13) and are joined and the end face (13) of the flange connection piece (7) and the end face (12) of the annular portion (11) are constructed in an oblique manner so as to complement each other.

2. Turbine housing according to claim 1, **characterised in that** the retention ring (8) has a radially peripheral crown portion (9) which is in abutment with an inner shoulder portion (10) of the bearing flange (5).

3. Turbine housing according to either claim 1 or 2, **characterised in that** the bearing flange (5) has on the inner periphery (15) thereof adjacent to the region of the joint between the flange connection piece (7) and retention ring (8) a radially peripheral groove (16).

4. Turbine housing according to any one of claims 1 to 3, **characterised in that** the retention ring (8) has on the outer periphery (17) thereof at least partially a profiling (18).

5. Turbine housing according to any one of claims 1 to 4, **characterised in that** the flange connection piece (7) is a materially uniform integral component of the inner housing (4).

6. Turbine housing according to any one of claims 1 to 5, **characterised in that** the bearing flange (5) has a web (19) which extends round at the outer side and via which the outer housing (3) is joined to the bearing flange (5).

7. Turbine housing according to any one of claims 1 to 6, **characterised in that** the bearing flange (5) is in abutment with an abutment portion (24) at the outer side against the flange connection piece (7) and at the outer side against the inner housing (4).

## Revendications

1. Boîtier de turbine pour un turbocompresseur à gaz d'échappement qui présente un boîtier externe (3) et un boîtier interne (4) ainsi qu'une bride d'appui (5), dans lequel le boîtier externe (3) est assemblé à la bride d'appui (5), **caractérisé en ce que** le boîtier interne (4) présente une bride à emboîtement (7) sur laquelle la bride d'appui (5) est positionnée et il est prévu un anneau de retenue (8) qui est assemblé à la bride à emboîtement (7) et la bride d'appui (5) est maintenue par l'anneau de retenue (8) dans la direction axiale (AR), dans lequel l'anneau de retenue (8) possède une section annulaire (11) dirigée vers la bride à emboîtement (7) avec une face de contact avant (12) et la bride à emboîtement (7) présente une face de contact (13), dans lequel la section annulaire (11) et la bride à emboîtement (7) viennent en contact mutuel et sont assemblées avec les faces de contact (12 ; 13) et la face de contact (13) de la bride à emboîtement (7) et la face de contact (12) de la section annulaire (11) sont formées mutuellement de manière complémentaire en oblique.

2. Boîtier de turbine selon la revendication 1, **caractérisé en ce que** l'anneau de retenue (8) présente une section de couronne circulant radialement (9) qui s'applique sur une section d'épaulement interne (10) de la bride d'appui (5).

3. Boîtier de turbine selon l'une quelconque des revendications 1 ou 2, **caractérisé en ce que** la bride d'appui (5) présente une rainure circulant radialement (16) sur sa périphérie interne (15) au voisinage de la zone de l'assemblage entre la bride à emboîtement (7) et l'anneau de retenue (8).

4. Boîtier de turbine selon l'une quelconque des revendications 1 à 3, **caractérisé en ce que** l'anneau de retenue (8) présente au moins par zones un profilage (18) sur sa périphérie externe (17).

5. Boîtier de turbine selon l'une quelconque des revendications 1 à 4, **caractérisé en ce que** la bride à emboîtement (7) est un composant d'un seul tenant et d'un seul matériau du boîtier interne (4).

6. Boîtier de turbine selon l'une quelconque des revendications 1 à 5, **caractérisé en ce que** la bride d'appui (5) présente une barrette circulant extérieurement (19) sur laquelle est assemblé le boîtier externe (3) avec la bride d'appui (5).

7. Boîtier de turbine selon l'une quelconque des revendications 1 à 6, **caractérisé en ce que** la bride d'appui (5) s'applique avec une section d'application (24) extérieurement sur la bride à emboîtement (7) ainsi qu'extérieurement sur le boîtier interne (4).
